# EUROPEAN PATENT SPECIFICATION

(11) **EP 3 181 437 B1**
(45) Date of publication and mention of the grant of the patent: **19.06.2019**
(21) Application number: 14899882.6
(22) Date of filing: 11.08.2014
(51) Int. Cl.: B62M 6/45, B62M 6/50, B62M 6/55, B62M 9/04

(54) **DRIVE UNIT AND ELECTRIC POWER-ASSISTED BICYCLE**
ANTRIEBSEINHEIT UND ELEKTRISCH UNTERSTÜTZTES FAHRRAD
UNITÉ D'ENTRAÎNEMENT ET BICYCLETTE À ASSISTANCE ÉLECTRIQUE

(43) Date of publication of application: 21.06.2017
(73) Proprietor: Panasonic Intellectual Property Management Co., Ltd., Osaka-shi, Osaka 540-6207 (JP)
(72) Inventor: KAWAKAMI, Masafumi, Osaka-shi, Osaka 540-6207 (JP); OZAWA, Satoshi, Osaka-shi, Osaka 540-6207 (JP)
(74) Representative: Grünecker Patent- und Rechtsanwälte PartG mbB
(86) International application number: PCT/JP2014/004164
(87) International publication number: WO 2016/024300

(56) References cited:
- JP-A- H09 207 863
- JP-A- 2001 270 486
- JP-A- 2001 270 486
- JP-B1- 5 202 769
- JP-B1- 5 523 636
- JP-B1- 5 523 636

## Description

### Technical Field

The present invention relates to a drive unit and an electric power-assisted bicycle including the drive unit.

### Background Art

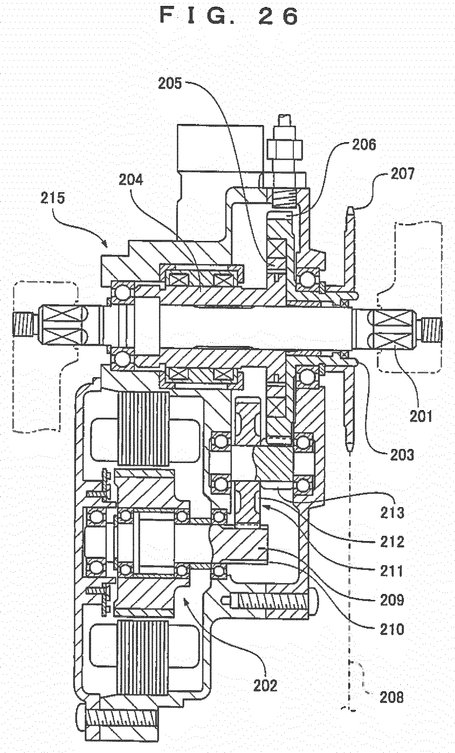

As shown in FIG. 26, a drive unit provided in an electric power-assisted bicycle of the related art includes, for example, a human-power driving system having a pedal crank shaft 201, a motor driving system that increases or reduces the output of a motor 202 according to a pedal force applied to the pedal crank shaft 201, and a cylindrical resultant force shaft 203 rotatable on the same axis as the pedal crank shaft 201. The driving systems are connected to one end of the resultant force shaft 203. Power is transmitted from the other end of the resultant force shaft 203 to a rear wheel.

The pedal crank shaft 201 penetrates a cylindrical intermediate shaft 204 that is adjacent to the resultant force shaft 203 and is rotatable on the same axis as the pedal crank shaft 201. One end of the intermediate shaft 204 is connected to the resultant force shaft 203 via a one-way clutch 205, whereas the other end of the intermediate shaft 204 is connected to the pedal crank shaft 201.

The resultant force shaft 203 has a plurality of teeth 206 on the outer periphery of the resultant force shaft 203. The resultant force shaft 203 has a sprocket 207 around which a chain 208 is wound. Moreover, an output shaft 209 of the motor 202 has an output gear 210. A speed reducer 211 has gears 212 and 213 that are engaged between the output gear 210 and the teeth 206 of the resultant force shaft 203.

With this configuration, pedaling transmits a human driving force from the pedal crank shaft 201 to the resultant force shaft 203 through the intermediate shaft 204 and the one-way clutch 205. Moreover, an auxiliary driving force generated from the motor 202 is transmitted to the resultant force shaft 203 through the speed reducer 211, the resultant force shaft 203 is rotated by the resultant driving force of the human driving force and the auxiliary driving force, and the sprocket 207 is rotated with the resultant force shaft 203, thereby transmitting the resultant driving force to the rear wheel through the chain 208 so as to rotate the rear wheel.

For example, a drive unit 215 for the electric power-assisted bicycle is disclosed in Patent Literature 1. JP5523636B1 shows the preamble of claim 1.

### Citation List

### Patent Literature

Patent Literature 1: Japanese Patent Publication No. H10-250673A

### Summary of Invention

### Technical Problem

Unfortunately, the drive unit 215 is not provided with a speed change mechanism and thus may cause an excessive load to the motor 202 or a bicycle rider when the electric power-assisted bicycle travels on an uphill road.

An object of the present invention is to reduce the load of a motor or a rider, in a drive unit and an electric power-assisted bicycle where a resultant-force transmission member is rotated by the resultant driving force of a human driving force and an auxiliary driving force and the rotation of the resultant-force transmission member is transmitted to a rear wheel.

### Solution to Problem

In order to attain the object, a first aspect of the invention is a drive unit provided for an electric power-assisted bicycle that can travel with a combination of a human driving force generated by a pedal force from a pedal and an auxiliary driving force generated by a motor,
the drive unit including a crank shaft rotatable by a human driving force, a resultant-force transmission member rotatable by the resultant driving force of a human driving force and an auxiliary driving force, an output wheel member provided on the resultant-force transmission member, and a speed change mechanism that changes the rotation speed of the resultant-force transmission member,
the crank shaft and the resultant-force transmission member being coaxial with each other,
the speed change mechanism having a plurality of selectable gears with different gear ratios,
the drive unit further including a detection unit that detects selected one of the gears.

With this configuration, the most suitable gear is selected according to the inclination of a road surface during riding on the electric power-assisted bicycle. This can reduce the load of the motor or a rider, achieving proper riding on the road surface.

In a drive unit according to a second aspect of the invention, a gear shifting state between the gears before and after a gear shift is detectable by the detection unit at a gear shift, and
when the gear shifting state is detected by the detection unit, the motor is controlled so as to temporarily reduce an auxiliary driving force.

With this configuration, at a gear shift during riding on the electric power-assisted bicycle, when the detection unit detects a gear shifting state, the auxiliary driving force of the motor temporarily decreases. Thus, for example, at a gear shift from a high gear to a low gear (downshift), the torque of a resultant driving force applied to the resultant-force transmission member temporarily decreases, preventing a large torque from being rapidly applied to the resultant-force transmission member. This allows smooth shifting (downshift) from the high gear to the low gear. Thus, an excessive resultant driving force is not momentarily applied to the resultant-force transmission member, eliminating the need for keeping the resultant-force transmission member at an excessive strength.

In a drive unit according to a third aspect of the invention, the detection unit has a plurality of detectors allowed to be turned on or off, and
the selected gear and the gear shifting state are detected based on the number of detectors turned on or off.

In a drive unit according to a fourth aspect of the invention, the gears include selectable low and high gears,
the speed change mechanism includes a low-speed gear, a high-speed gear, and a gear shift mechanism that shifts the gears,
the low-speed gear and the high-speed gear interlock with the motor,
the gear shift mechanism includes a movable shifting member that is movable to a low-gear shift position and a high-gear shift position,
if the low gear is selected, the movable shifting member moves to the low-gear shift position and a resultant driving force is transmitted to the resultant-force transmission member through the low-speed gear so as to rotate the resultant-force transmission member, and
if the high gear is selected, the movable shifting member moves to the high-gear shift position and a resultant driving force is transmitted to the resultant-force transmission member through the high-speed gear so as to rotate the resultant-force transmission member.

With this configuration, for example, at a gear shift from the high gear to the low gear (downshift), the movable shifting member of the gear shift mechanism moves from the high-gear shift position to the low-gear shift position and a resultant driving force transmitted to the resultant-force transmission member via the high-speed gear is transmitted to the resultant-force transmission member via the low-speed gear so as to rotate the resultant-force transmission member.

At this point, when a gear shifting state from the high gear to the low gear is detected, the auxiliary driving force of the motor temporarily decreases. This temporarily reduces the torque of a resultant driving force applied to the resultant-force transmission member during a gear shift from the high gear to the low gear, preventing a large torque form being rapidly applied to the resultant-force transmission member.

In a drive unit according to a fifth invention, the detection unit detects a shifting position of the movable shifting member so as to identify the selected gear, and the detection unit detects an intermediate position between the low-gear shift position and the high-gear shift position of the movable shifting member so as to recognize a gear shifting state.

With this configuration, for example, at a gear shift from the high gear to the low gear (downshift), the detection unit detects an intermediate position between the high-gear shift position and the low-gear shift position of the movable shifting member so as to recognize a gear shifting state from the high gear to the low gear. This temporarily reduces the auxiliary driving force of the motor, preventing a large torque from being rapidly applied to the resultant-force transmission member during a gear shift from the high gear to the low gear.

After that, the detection unit detects the low-gear shift position of the movable shifting member so as to recognize a gear shift to the low gear.

A sixth invention is an electric power-assisted bicycle including the drive unit according to one of the first to fifth inventions,
the electric power-assisted bicycle including a rear wheel member provided on a rear wheel, and
an endless driving force transmission member looped over the output wheel member and the rear wheel member.

### Advantageous Effects of Invention

As described above, according to the present invention, the most suitable gear is selected according to the inclination of a road surface during riding on the electric power-assisted bicycle. This can reduce the load of the motor or a rider, achieving proper riding on the road surface.

Moreover, at a gear shift during riding on the electric power-assisted bicycle, when the detection unit detects a gear shifting state, the auxiliary driving force of the motor temporarily decreases. Thus, for example, at a gear shift from a high gear to a low gear, a large torque is not rapidly applied to the resultant-force transmission member. This allows smooth shifting from the high gear to the low gear. Thus, at a gear shift an excessive resultant driving force is not momentarily applied to the resultant-force transmission member, eliminating the need for keeping the resultant-force transmission member at an excessive strength.

### Brief Description of Drawings

FIG. 1 is a side view showing a bicycle according to a first embodiment of the present invention.
FIG. 2 is a partial cut side view of the electric power-assisted bicycle.
FIG. 3 is a right side view showing a drive unit for the electric power-assisted bicycle.
FIG. 4 is a right-side cross sectional view of the drive unit.
FIG. 5 is a sectional plan view of the drive unit shifted to a low gear.
FIG. 6 is an enlarged sectional plan view of the principal part of the drive unit shown in FIG. 5.
FIG. 7 is a conceptual side view showing a low-speed one-way clutch and a high-speed one-way clutch for the drive unit shifted to the low gear.
FIG. 8 is a cross-sectional view showing a shifting clutch for the drive unit.
FIG. 9 is a sectional plan view showing the drive unit shifted to a high gear.
FIG. 10 is an enlarged sectional plan view of the principal part of the drive unit shown in FIG. 9.
FIG. 11 is a conceptual side view showing the low-speed one-way clutch and the high-speed one-way clutch for the drive unit shifted to the high gear.
FIG. 12 is a cross-sectional view showing a gear shift mechanism for the drive unit shifted to the low gear.
FIG. 13 is a perspective view showing optical sensors in a detection unit for the drive unit.
FIG. 14 is a perspective view showing detection portions in the detection unit for the drive unit.
FIG. 15 shows the positional relationship between the optical sensors and the detection portions in the detection unit for the drive unit shifted to the low gear.
FIG. 16 is a cross-sectional view showing the gear shift mechanism for the drive unit shifted to the high gear.
FIG. 17 shows the positional relationship between the optical sensors and the detection portions in the detection unit for the drive unit shifted to the high gear.
FIG. 18 is a cross-sectional view showing the gear shift mechanism for the drive unit during a gear shifting state.
FIG. 19 shows the positional relationship between the optical sensors and the detection portions in the detection unit for the drive unit during the gear shifting state.
FIG. 20 shows the positional relationship between optical sensors and detection portions in a detection unit for a drive unit shifted to a low gear according to a second embodiment of the present invention.
FIG. 21 shows the positional relationship between the optical sensors and the detection portions in the detection unit for the drive unit shifted to a high gear according to the second embodiment of the present invention.
FIG. 22 shows the positional relationship between the optical sensors and the detection portions in the detection unit for the drive unit during a gear shifting state.
FIG. 23 shows the positional relationship between optical sensors and detection portions in a detection unit for a drive unit shifted to a low gear according to a third embodiment of the present invention.
FIG. 24 shows the positional relationship between the optical sensors and the detection portions in the detection unit for the drive unit shifted to a high gear.
FIG. 25 shows the positional relationship between the optical sensors and the detection portions in the detection unit for the drive unit during a gear shifting state.
FIG. 26 is a sectional plan view showing a drive unit of the related art.

### Description of Embodiments

Embodiments of the present invention will be described below with reference to the accompanying drawings.

### (First Embodiment)

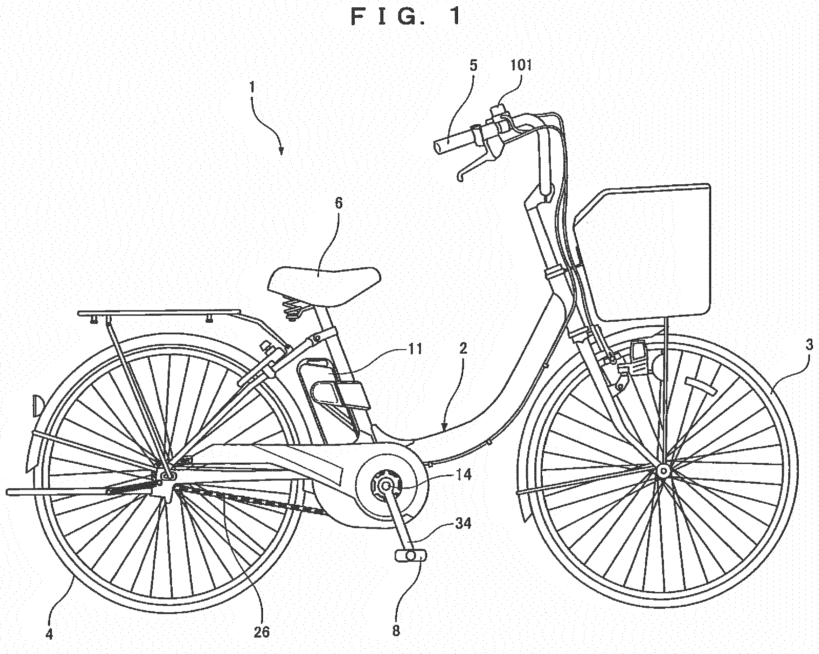

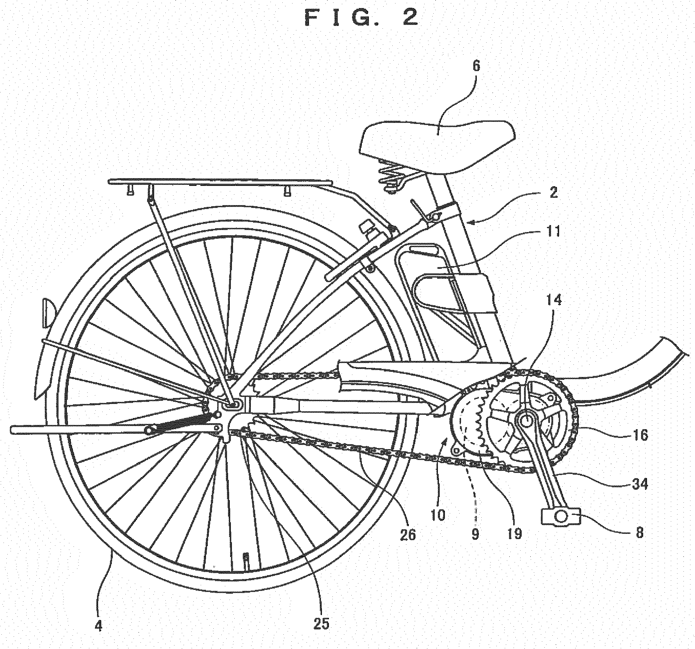

In FIGS. 1 and 2, reference numeral 1 denotes an electric power-assisted bicycle according to a first embodiment of the present invention. As shown in FIGS. 1 and 2, the electric power-assisted bicycle 1 includes a frame 2, a front wheel 3, a rear wheel 4, a handle bar 5, a saddle 6, pedals 8, a drive unit 10 including a motor 9, and a battery 11 including a secondary battery for supplying power to the motor 9. The electric power-assisted bicycle 1 can travel with a combination of a human driving force generated by a pedal force from the pedal 8 and an auxiliary driving force (assisting force) generated by the motor 9.

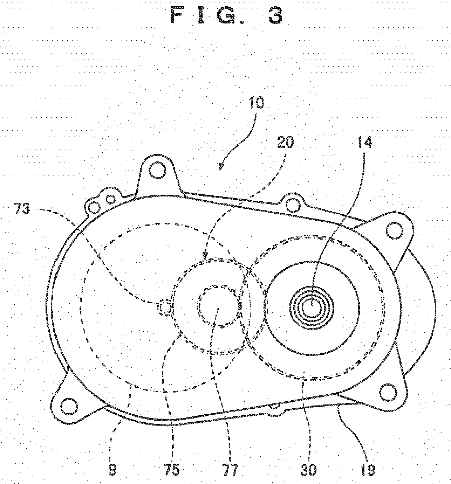

As shown in FIGS. 3 to 5, the drive unit 10 includes the motor 9, a crank shaft 14 rotatable by a human driving force, a resultant-force transmission member 15 rotatable by the resultant driving force of a human driving force and an auxiliary driving force, an output sprocket 16 (an example of an output wheel member) provided on the resultant-force transmission member 15, a speed reduction mechanism 20 that decelerates the rotation of the motor 9 and transmits the rotation to the resultant-force transmission member 15, a speed change mechanism 17 that changes the rotation speed of the resultant-force transmission member 15 according to a plurality of gears, a control unit 18, and a case 19.

As shown in FIG. 2, a rear sprocket 25 (an example of a rear wheel member) is provided at the center of the rear wheel 4. An endless chain 26 (an example of a driving force transmission member) is looped over the output sprocket 16 and the rear sprocket 25.

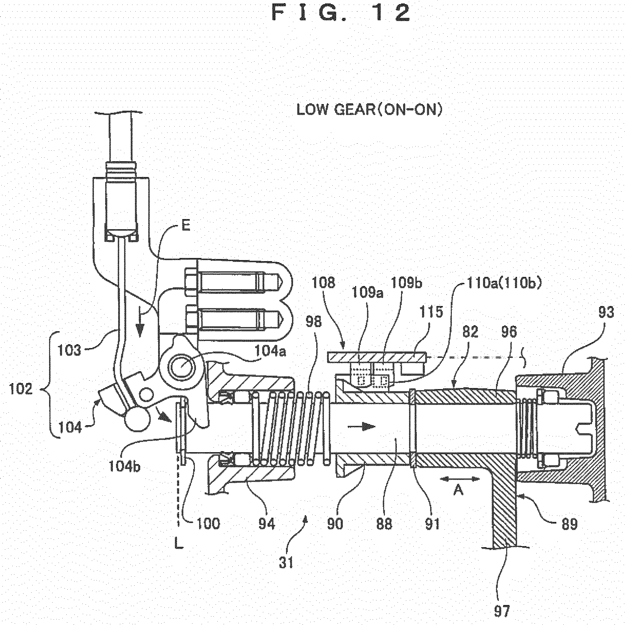

As shown in FIGS. 3 to 8, the speed change mechanism 17 includes a low-speed gear 29, a high-speed gear 30, and a gear shift mechanism 31 (FIG. 12) that shifts gears.

The crank shaft 14 penetrates the case 19 of the drive unit 10 so as to be rotatably held. Crank arms 34 are provided on the right and left ends of the crank shaft 14. The pedal 8 is provided on the end of the crank arm 34.

The resultant-force transmission member 15 and the low-speed gear 29 are disposed on the outer periphery of the crank shaft 14. Furthermore, a cylindrical human-power transmission member 37 and an interlocking cylindrical part 38 are disposed on the outer periphery of the crank shaft 14. The human-power transmission member 37 transmits a human driving force from the crank shaft 14 to the interlocking cylindrical part 38. The interlocking cylindrical part 38 transmits a human driving force from the human-power transmission member 37 to the resultant-force transmission member 15.

Serration parts 39 (or spline parts) are formed respectively on the inner periphery of the human-power transmission member 37 and the left side of the outer periphery of the crank shaft 14 so as to be engaged with each other. The human-power transmission member 37 is fit onto the left side of the crank shaft 14 so as to integrally rotate with the crank shaft 14 via the serration parts 39.

Serration parts 40 (or spline parts) are formed respectively on the inner periphery of the left end of the interlocking cylindrical part 38 and the outer periphery of the right end of the human-power transmission member 37 so as to be engaged with each other. The interlocking cylindrical part 38 is fit onto the crank shaft 14 and is disposed next to the right side of the human-power transmission member 37 so as to integrally rotate with the human-power transmission member 37 via the serration parts 40.

A magneto-striction generation portion 42 is provided on the outer surface of the human-power transmission member 37. Coils 43 are provided with a certain clearance (space) on the outer periphery of the magneto-striction generation portion 42. The magneto-striction generation portion 42 and the coils 43 constitute a torque sensor 44 that detects a human driving force from the crank shaft 14.

A detected member 45 is provided on the outer periphery of the interlocking cylindrical part 38. Moreover, a rotation detector 46 is provided with a certain clearance on the outer periphery of the interlocking cylindrical part 38. The detected member 45 and the rotation detector 46 constitute a rotation detection unit 47. The amount and direction of rotation of the interlocking cylindrical part 38 are detected by the rotation detection unit 47. Furthermore, the amount and direction of rotation of the crank shaft 14 or the pedal 8 can be detected based on the detected amount and direction of the interlocking cylindrical part 38. The rotation detector 46 is, for example, an optical sensor. The detected member 45 is, for example, an annular member circumferentially having a plurality of teeth (light-shielding portions).

The low-speed gear 29 is larger in diameter than the high-speed gear 30. The low-speed gear 29 has teeth 49 formed on the outer periphery of the low-speed gear 29 and a small-diameter cylindrical part 50 formed on the inner periphery of the low-speed gear 29 so as to protrude to the right side. Moreover, the low-speed gear 29 is rotatably fit onto the crank shaft 14. The low-speed gear 29 and the interlocking cylindrical part 38 can interlock with each other via a one-way clutch 51. The one-way clutch 51 circumferentially connects and disconnects the low-speed gear 29 to and from the interlocking cylindrical part 38.

The resultant-force transmission member 15 is a cylindrical member rotatably fit onto the crank shaft 14. The resultant-force transmission member 15 has a medium-diameter cylindrical part 53 formed on the left side of the resultant-force transmission member 15, a small-diameter cylindrical part 54 formed on the right side of the resultant-force transmission member 15, teeth 55 formed on the inner periphery of the medium-diameter cylindrical part 53, and a spline part 56 formed on the outer periphery of the medium-diameter cylindrical part 53. The crank shaft 14 and the resultant-force transmission member 15 are coaxial with each other. The output sprocket 16 is fit onto the small-diameter cylindrical part 54 so as to integrally rotate with the resultant-force transmission member 15.

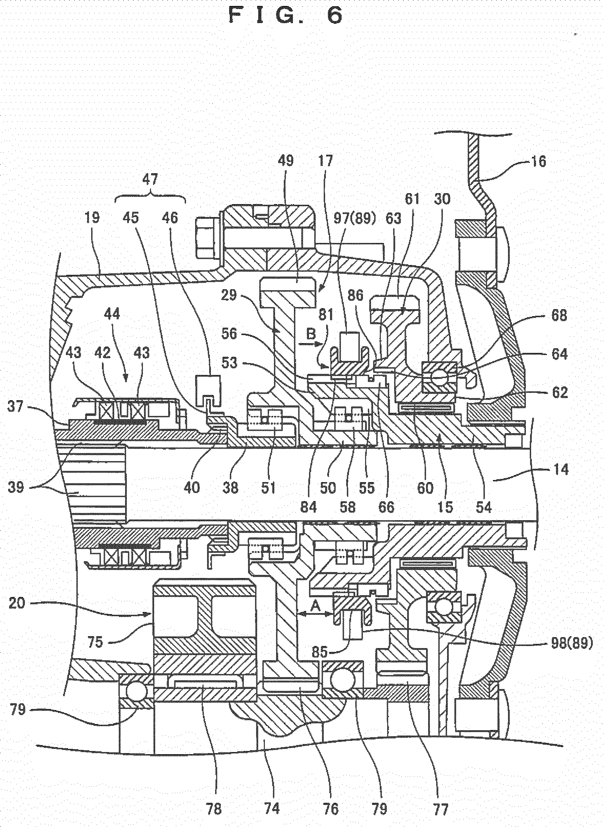

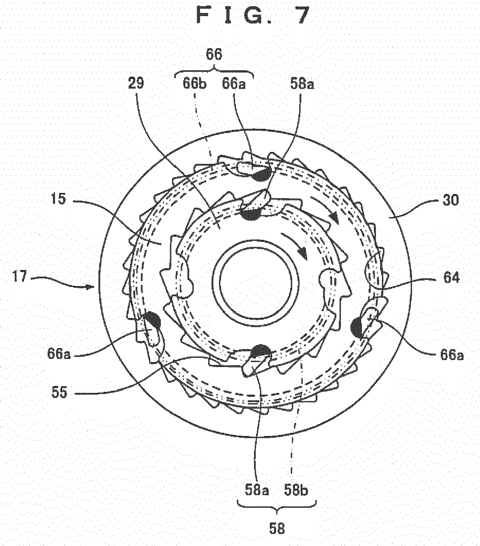

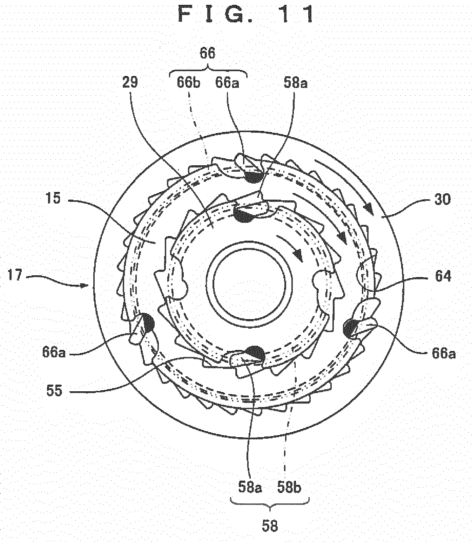

The cylindrical part 50 of the low-speed gear 29 is inserted into the medium-diameter cylindrical part 53 of the resultant-force transmission member 15, and a low-speed one-way clutch 58 is provided on the outer periphery of the cylindrical part 50 of the low-speed gear 29. As shown in FIGS. 6, 7, 10, and 11, the low-speed one-way clutch 58 includes a plurality of cams 58a (ratchet claws) that can be radially raised or fell sideways and an annular spring 58b that radially urges the cams 58a outward into an upright position. The cams 58a of the low-speed one-way clutch 58 are removably engaged with the teeth 55 of the resultant-force transmission member 15. As shown in FIG. 7, the cams 58a shifted into an upright position are engaged with the teeth 55. As shown in FIG. 11, the cams 58a shifted into a horizontal position are disengaged from the teeth 55.

The high-speed gear 30 is rotatably fit onto the small-diameter cylindrical part 54 of the resultant-force transmission member 15 via a bearing 60. The high-speed gear 30 has teeth 61 formed on the outer periphery of the high-speed gear 30, a small-diameter cylindrical part 62 formed on the inner periphery of the high-speed gear 30 so as to protrude to the right side, a medium-diameter cylindrical part 63 formed between the teeth 61 and the small-diameter cylindrical part 62 so as to protrude to the left side, and teeth 64 formed on the inner periphery of the medium-diameter cylindrical part 63. The high-speed gear 30 is smaller in diameter than the low-speed gear 29.

A high-speed one-way clutch 66 is provided on the outer periphery of the medium-diameter cylindrical part 53 of the resultant-force transmission member 15. As shown in FIGS. 6, 7, 10, and 11, the high-speed one-way clutch 66 has a plurality of cams 66a (ratchet claws) that can be radially raised or fell sideways and an annular spring 66b that radially urges the cams 66a outward into an upright position. The cams 66a of the high-speed one-way clutch 66 are removably engaged with the teeth 64 of the high-speed gear 30. As shown in FIG. 11, the cams 66a shifted to an upright position are engaged with the teeth 64. As shown in FIG. 7, the cams 66a shifted to a horizontal position are disengaged from the teeth 64.

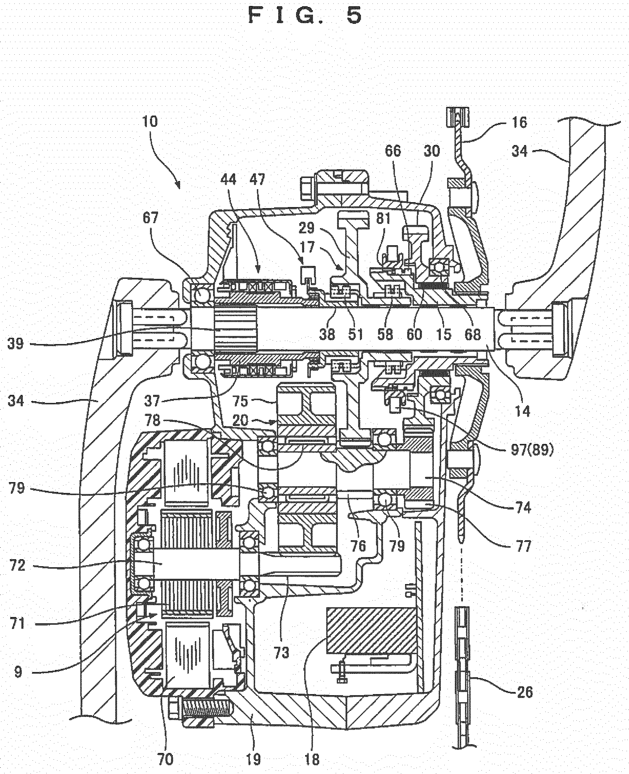

As shown in FIGS. 5 and 6, the left end of the crank shaft 14 is rotatably supported by the case 19 via one bearing 67. The small-diameter cylindrical part 62 of the high-speed gear 30 is rotatably supported by the case 19 with the right end of the crank shaft 14 and the resultant-force transmission member 15 via another bearing 68.

The motor 9 includes a stator 70, a rotor 71, and a rotating drive shaft 72 integrally rotatable with the rotor 71. Moreover, a rotating driving gear 73 is formed on the outer periphery of the end of the rotating drive shaft 72.

The speed reduction mechanism 20 includes an intermediate shaft 74 disposed in parallel with and between the crank shaft 14 and the rotating drive shaft 72, first to third reduction gears 75 to 77 provided on the intermediate shaft 74, and a one-way clutch 78. The intermediate shaft 74 is rotatable via a pair of bearings 79 in the case 19. The first reduction gear 75 is larger in diameter than the second reduction gear 76, whereas the third reduction gear 77 is larger in diameter than the second reduction gear 76 and is smaller in diameter than the first reduction gear 75.

The first reduction gear 75 is engaged with the rotating driving gear 73, the second reduction gear 76 is engaged with the low-speed gear 29, and the third reduction gear 77 is engaged with the high-speed gear 30. With this configuration, the low-speed gear 29 and the high-speed gear 30 interlock with the motor 9 via the speed reduction mechanism 20. The one-way clutch 78 for interrupting a human driving force is provided between the outer periphery of the intermediate shaft 74 and the inner periphery of the first reduction gear 75. If the intermediate shaft 74 and the first reduction gear 75 are connected via the one-way clutch 78, the first to third reduction gears 75 to 77 are integrally rotated with the intermediate shaft 74 in one direction.

The speed change mechanism 17 has a low gear (an example of a gear) and a high gear (an example of a gear) that are selectable with different gear ratios. If the low gear is selected, the rotation of the low-speed gear 29 is transmitted to the resultant-force transmission member 15, whereas if the high gear is selected, the rotation of the high-speed gear 30 is transmitted to the resultant-force transmission member 15.

As shown in FIGS. 6, 8, and 12, the gear shift mechanism 31 includes a shifting clutch 81 that changes the orientations of the cams 66a of the high-speed one-way clutch 66 and a movable shifting member 82 that is movable to a low-gear shift position L and a high-gear shift position H.

The shifting clutch 81 is an annular member that has a spline part 84 on the inner periphery of the shifting clutch 81 and a recess portion 85 on the outer periphery of the shifting clutch 81. The shifting clutch 81 is fit onto the medium-diameter cylindrical part 53 of the resultant-force transmission member 15. The spline part 84 of the shifting clutch 81 and the spline part 56 of the resultant-force transmission member 15 are circumferentially engaged with each other. The shifting clutch 81 is movable via the spline parts 56 and 84 in an axial direction A of the crank shaft 14.

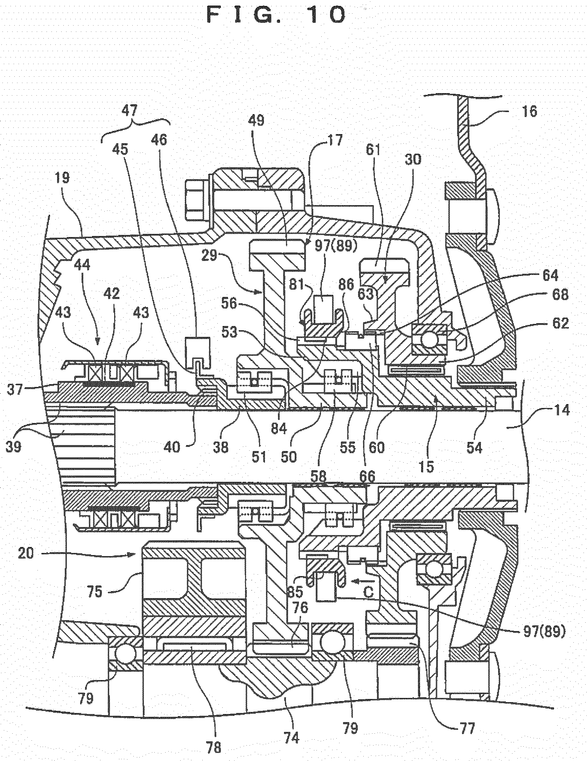

At a corner on the right end of the inner periphery of the shifting clutch 81, an inclined surface 86 is formed so as to radially extend outward toward the end face of the shifting clutch 81. The inclined surface 86 guides the cams 66a of the high-speed one-way clutch 66 into a horizontal position. As shown in FIG. 6, the shifting clutch 81 moved in one direction B comes into contact with the cams 66a of the high-speed one-way clutch 66, shifting the cams 66a into a horizontal position. As shown in FIG. 10, the shifting clutch 81 moved in the other direction C is separated from the cams 66a of the high-speed one-way clutch 66, shifting the cams 66a into an upright position.

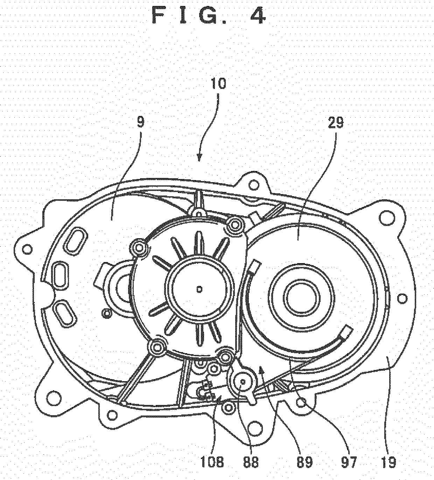

As shown in FIGS. 4 and 12, the movable shifting member 82 is a member for moving the shifting clutch 81. The movable shifting member 82 includes a shifting shaft 88, a clutch arm 89, an interlocking cylinder 90, and a washer 91. The shifting shaft 88 is supported by a pair of supporting portions 93 and 94 provided in the case 19. The shifting shaft 88 is parallel to the crank shaft 14 and is movable in the axial direction A.

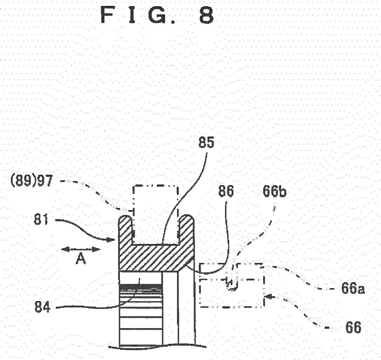

The clutch arm 89 has a cylindrical part 96 and a C-shaped arm 97 provided on the cylindrical part 96. As shown in FIGS. 6 and 8, the arm 97 is fit into the recess portion 85 of the shifting clutch 81. As shown in FIG. 12, the washer 91 is fit onto the shifting shaft 88 and is located between the cylindrical part 96 of the clutch arm 89 and the interlocking cylinder 90. The shifting shaft 88 is inserted into the cylindrical part 96 of the clutch arm 89 and the interlocking cylinder 90. The clutch arm 89 and the interlocking cylinder 90 are movable with the shifting shaft 88 in the axial direction A. Moreover, the movable shifting member 82 is urged by a coil spring 98 so as to move from the high-gear shift position H to the low-gear shift position L. Furthermore, an engagement ring 100 is provided on one end of the shifting shaft 88.

As shown in FIG. 1, the handle bar 5 has a manual operation part 101 for selecting gears. A rider operates the manual operation part 101 so as to select the low gear and the high gear. The electric power-assisted bicycle 1 further includes a shifting device 102 that moves the movable shifting member 82 in response to an operation on the manual operation part 101. As shown in FIG. 12, the shifting device 102 has a cable 103 and a link 104. The link 104 can pivot about a supporting point 104a and has an engagement arm 104b engaged with the engagement ring 100 of the shifting shaft 88. The cable 103 is connected between the manual operation part 101 and the link 104.

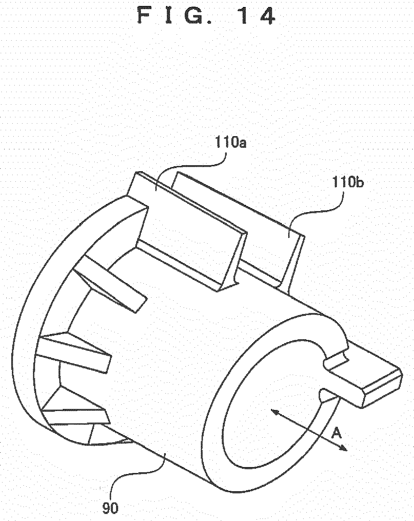

As shown in FIGS. 12 to 15, the case 19 of the drive unit 10 contains a detection unit 108 that detects the gear selected by the manual operation part 101. The detection unit 108 includes two (multiple) optical sensors 109a and 109b (an example of a detector) that can be turned on or off and two (multiple) detection portions 110a and 110b.

The optical sensors 109a and 109b are transmission sensors where detected light 113 emitted from a light emitting portion 112 is received by a light receiving portion 114 on the other side. The optical sensors 109a and 109b are attached to a mount 115. The mount 115 is provided in the case 19. The optical sensors 109a and 109b partially overlap each other in the axial direction A and are displaced from each other in a direction D orthogonal to the axial direction A.

The detection portions 110a and 110b move with the movable shifting member 82 in the axial direction A and block the detected light 113 emitted from the light emitting portions 112 of the optical sensors 109a and 109b. The detection portions 110a and 110b are provided on the outer periphery of the interlocking cylinder 90.

The control unit 18 (FIG. 5) of the drive unit 10 controls the motor 9 and so on based on detection by the detection unit 108.

The effects of the configuration will be discussed below.

### (1) Action of the drive unit 10

(1-1) During riding on the electric power-assisted bicycle 1, for example, if a rider operates the manual operation part 101 to select the low gear, as shown in FIG. 12, the cable 103 moves in one direction E, allowing an urging force of the spring 98 to move the movable shifting member 82 to the low-gear shift position L.

Thus, as shown in FIG. 6, the shifting clutch 81 moves in the one direction B in synchronization with the clutch arm 89 and comes into contact with the cams 66a of the high-speed one-way clutch 66. Hence, as shown in FIG. 7, the cams 66a are shifted into a horizontal position, leading to disengagement between the resultant-force transmission member 15 and the high-speed gear 30.

In this state, the pedals 8 are pressed so as to rotate the crank shaft 14 as shown in FIGS. 5 and 6. This rotates the human-power transmission member 37 and the interlocking cylindrical part 38. At this point, the interlocking cylindrical part 38 is connected to the low-speed gear 29 via the one-way clutch 51 in the rotation direction. Thus, the rotation of the interlocking cylindrical part 38 is transmitted to the low-speed gear 29.

Moreover, driving of the motor 9 rotates the rotating drive shaft 72, the first reduction gear 75 and the intermediate shaft 74 of the speed reduction mechanism 20, and the second and third reduction gears 76 and 77, transmits the rotation of the second reduction gear 76 to the low-speed gear 29, and transmits the rotation of the third reduction gear 77 to the high-speed gear 30.

This rotates the low-speed gear 29 and the high-speed gear 30. At this point, as shown in FIGS. 5 to 7, the low-speed gear 29 is connected to the resultant-force transmission member 15 via the low-speed one-way clutch 58 in the rotation direction. Thus, the rotation of the low-speed gear 29 is transmitted to the resultant-force transmission member 15 to rotate the resultant-force transmission member 15. This rotates the output sprocket 16 and revolves the chain 26, allowing the rotation of the rear wheel 4. At this point, the resultant driving force of a human driving force applied to the crank shaft 14 and an auxiliary driving force of the motor 9 is transmitted from the low-speed gear 29 to the resultant-force transmission member 15, and then the resultant driving force rotates the resultant-force transmission member 15.

At this point, the cams 66a of the high-speed one-way clutch 66 are shifted into a horizontal position so as to disengage the resultant-force transmission member 15 from the high-speed gear 30. Thus, the rotation of the high-speed gear 30 is not transmitted to the resultant-force transmission member 15.

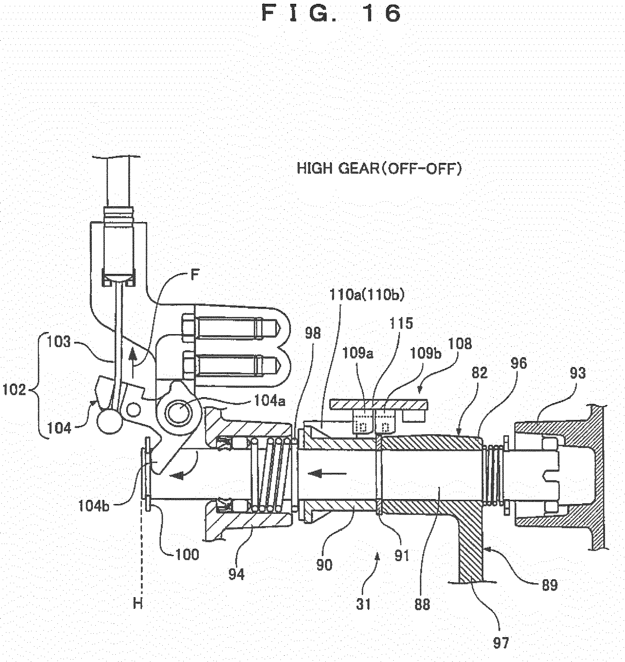

(1-2) If a rider operates the manual operation part 101 to select the high gear, as shown in FIG. 16, the cable 103 moves in the other direction F so as to pivot the link 104 in the other direction, moving the movable shifting member 82 to the high-gear shift position H against the urging force of the spring 98.

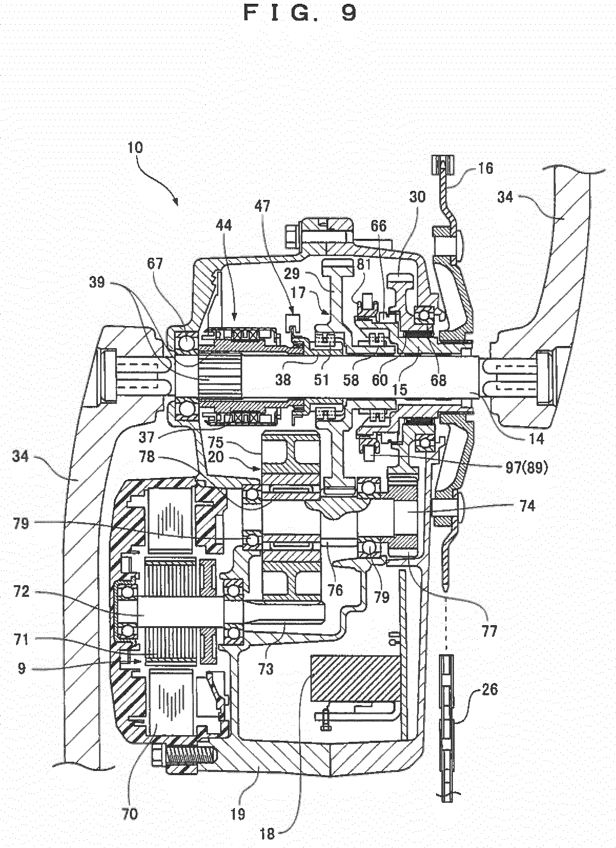

Thus, as shown in FIG. 10, the shifting clutch 81 moves in the other direction C in synchronization with the clutch arm 89 and separates from the cams 66a of the high-speed one-way clutch 66. Hence, as shown in FIGS. 9 to 11, the cams 66a are shifted into an upright position by the urging force of the spring 66b, connecting the resultant-force transmission member 15 and the high-speed gear 30.

In this state, the pedals 8 are pressed to rotate the crank shaft 14. This rotates the human-power transmission member 37 and the interlocking cylindrical part 38. At this point, the interlocking cylindrical part 38 is connected to the low-speed gear 29 via the one-way clutch 51 in the rotation direction. Thus, the rotation of the interlocking cylindrical part 38 is transmitted to the low-speed gear 29.

Moreover, driving of the motor 9 rotates the rotating drive shaft 72, the first reduction gear 75 and the intermediate shaft 74 of the speed reduction mechanism 20, and the second and third reduction gears 76 and 77, transmits the rotation of the second reduction gear 76 to the low-speed gear 29, and transmits the rotation of the third reduction gear 77 to the high-speed gear 30.

This rotates the low-speed gear 29 and the high-speed gear 30. At this point, the high-speed gear 30 is connected to the resultant-force transmission member 15 via the high-speed one-way clutch 66 in the rotation direction. Thus, the rotation of the high-speed gear 30 is transmitted to the resultant-force transmission member 15 to rotate the resultant-force transmission member 15. At this point, a resultant driving force is transmitted from the high-speed gear 30 to the resultant-force transmission member 15, and then the resultant driving force rotates the resultant-force transmission member 15.

At this point, the low-speed gear 29 and the high-speed gear 30 rotate with different gear ratios such that the high-speed gear 30 rotates faster than the low-speed gear 29. Thus, the resultant-force transmission member 15 also rotates faster than the low-speed gear 29. As shown in FIG. 11, the cams 58a of the low-speed one-way clutch 58 are not engaged with the teeth 55 of the resultant-force transmission member 15, keeping the low-speed gear 29 in an idle state.

Upon shifting to the low gear as described in (1-1) (FIG. 6), the torque of a resultant driving force transmitted from the low-speed gear 29 to the resultant-force transmission member 15 is higher than that of a resultant driving force transmitted from the high-speed gear 30 to the resultant-force transmission member 15 shifted to the high gear described in (1-2) (FIG. 10).

Thus, for example, the manual operation part 101 of the electric power-assisted bicycle 1 on an uphill road is operated to select the low gear, transmitting a resultant driving force with a high torque to the rear wheel 4. This can reduce the load of the motor 9 or a rider. If a rider intends to travel faster on a flat road or the like, the rider operates the manual operation part 101 to select the high gear. This reduces the torque of the resultant-force transmission member 15 but increases the rotation speed of the resultant-force transmission member 15, thereby increasing the rotation speed of the rear wheel 4. Thus, the traveling speed of the electric power-assisted bicycle 1 can be easily increased. (2) Action of the detection unit 108

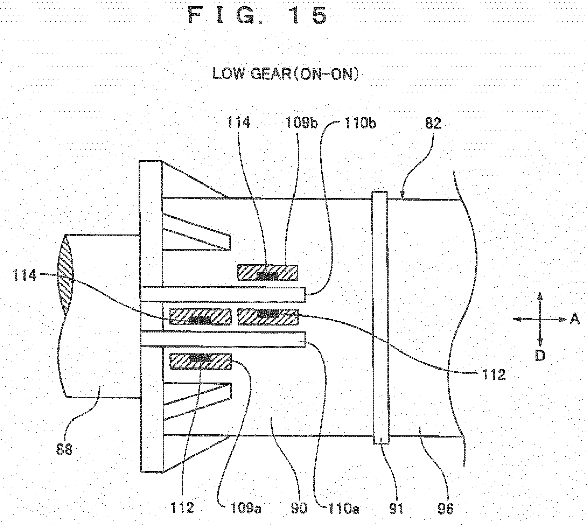

As described in (1-1), if the low gear is selected and the movable shifting member 82 is moved to the low-gear shift position L (see FIG. 12), as shown in FIG. 15, the first detection portion 110a is inserted between the light emitting portion 112 and the light receiving portion 114 of the first optical sensor 109a, meanwhile the second detection portion 110b is inserted between the light emitting portion 112 and the light receiving portion 114 of the second optical sensor 109b. Thus, the detected light 113 of the first optical sensor 109a is blocked by the first detection portion 110a, meanwhile the detected light 113 of the second optical sensor 109b is blocked by the second detection portion 110b.

This turns on both of the first optical sensor 109a and the second optical sensor 109b. Accordingly, as shown in FIG. 12, the control unit 18 detects that the movable shifting member 82 has reached the low-gear shift position L and recognizes shifting of the speed change mechanism 17 to the low gear based on the detection.

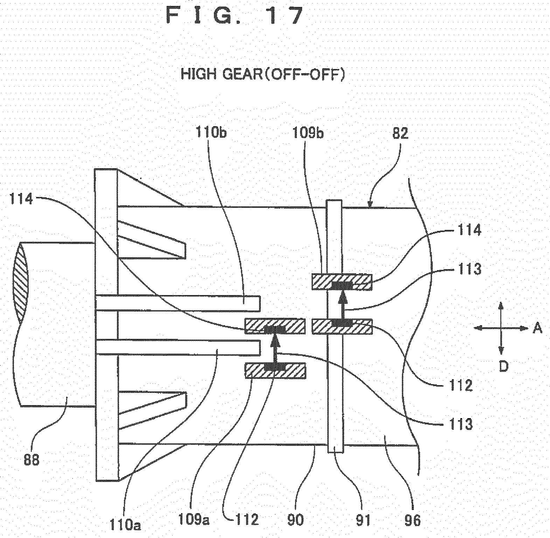

As described in (1-2), if the high gear is selected and the movable shifting member 82 is moved to the high-gear shift position H (FIG. 16), as shown in FIG. 17, the first detection portion 110a is removed from a portion between the light emitting portion 112 and the light receiving portion 114 of the first optical sensor 109a, meanwhile the second detection portion 110b is removed from a portion between the light emitting portion 112 and the light receiving portion 114 of the second optical sensor 109b. Thus, the detected light 113 of the first optical sensor 109a is received by the light receiving portion 114 without being blocked, meanwhile the detected light 113 of the second optical sensor 109b is received by the light receiving portion 114 without being blocked.

This turns off both of the first optical sensor 109a and the second optical sensor 109b. Accordingly, as shown in FIG. 16, the control unit 18 detects that the movable shifting member 82 has reached the high-gear shift position H and recognizes shifting of the speed change mechanism 17 to the high gear based on the detection.

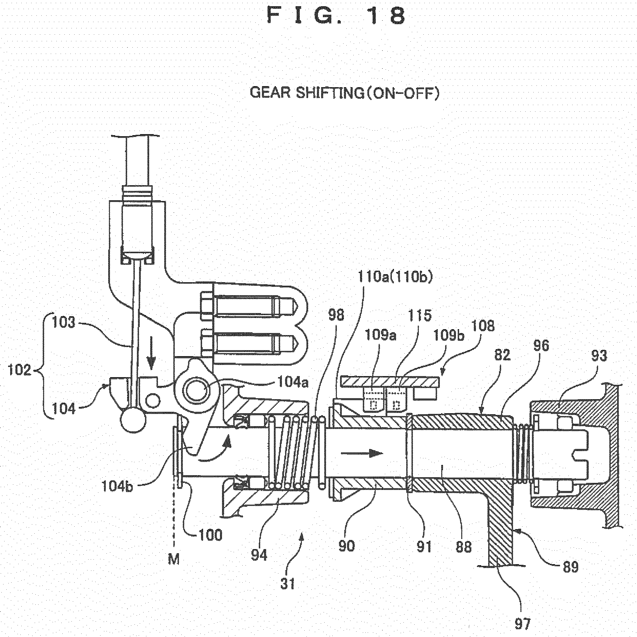

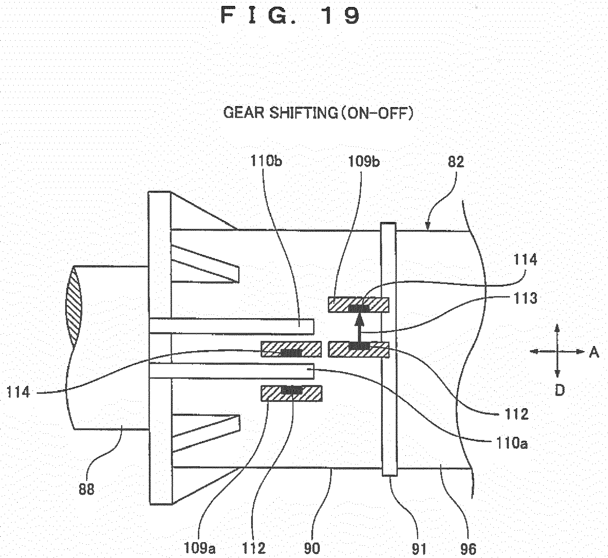

During riding on the electric power-assisted bicycle 1 with the speed change mechanism 17 shifted to the high gear, if a rider operates the manual operation part 101 to shift the speed change mechanism 17 from the high gear to the low gear (downshift), the urging force of the spring 98 moves the movable shifting member 82 from the high-gear shift position H (FIG. 16) to the low-gear shift position L (FIG. 12). At this point, as shown in FIGS. 18 and 19, at a shifting intermediate position M (an example of an intermediate position) of the movement of the movable shifting member 82 from the high-gear shift position H to the low-gear shift position L, the first detection portion 110a is inserted between the light emitting portion 112 and the light receiving portion 114 of the first optical sensor 109a, whereas the second detection portion 110b is not inserted between the light emitting portion 112 and the light receiving portion 114 of the second optical sensor 109b and is kept separated from the light emitting portion 112 and the light receiving portion 114. Thus, the detected light 113 of the first optical sensor 109a is blocked by the first detection portion 110a, whereas the detected light 113 on the detection portion 110b of the second optical sensor 109b is received by the light receiving portion 114 without being blocked.

This turns on the first optical sensor 109a and turns off the second optical sensor 109b. Accordingly, the control unit 18 detects that the movable shifting member 82 has reached the shifting intermediate position M and recognizes, based on the detection, that the speed change mechanism 17 is being shifted from the high gear (an example of a gear before a gear shift) to the low gear (an example of a gear after a gear shift).

When recognizing a gear shifting state from the high gear to the low gear, the control unit 18 controls the motor 9 so as to temporarily reduce an auxiliary driving force. This temporarily reduces the torque of a resultant driving force applied to the resultant-force transmission member 15 during a gear shift, preventing a large torque from being rapidly applied to the resultant-force transmission member 15. This allows smooth shifting (downshift) from the high gear to the low gear. Thus, an excessive resultant driving force is not momentarily applied to the resultant-force transmission member 15, eliminating the need for keeping the resultant-force transmission member 15 at an excessive strength.

A contact force (engaging force) between the cams 66a of the high-speed one-way clutch 66 and the teeth 64 of the high-speed gear 30 temporarily decreases in the gear shifting state from the high gear to the low gear, facilitating removal of the cams 66a from the teeth 64 as shown in FIG. 7. This ensures disengagement between the resultant-force transmission member 15 and the high-speed gear 30 as shown in FIG. 6, achieving smooth shifting from the high gear to the low gear (downshift).

If the auxiliary driving force of the motor 9 is not controlled so as to temporarily decrease, the teeth 64 of the high-speed gear 30 are strongly brought into contact with the cams 66a of the high-speed one-way clutch 66, disadvantageously making it difficult to disengage the cams 66a from the teeth 64. This problem is likely to occur when a large pedal force is applied to the pedal 8 on an uphill road and a large driving force is applied to the drive unit 10.

If the movable shifting member 82 passes through the shifting intermediate position M (FIG. 18) from the high-gear shift position H (FIG. 16) and reaches the low-gear shift position L (FIG. 12), as shown in FIG. 15, the first optical sensor 109a and the second optical sensor 109b of the detection unit 108 are both turned on. The control unit 18 detects that the movable shifting member 82 has reached the low-gear shift position L, and then restores the auxiliary driving force of the motor 9 to an original auxiliary driving force based on the detection.

During riding on the electric power-assisted bicycle 1 with the speed change mechanism 17 shifted to the low gear, if a rider operates the manual operation part 101 to shift the speed change mechanism 17 from the low gear to the high gear (upshift), as shown in FIGS. 18 and 19, the control unit 18 detects that the movable shifting member 82 has reached the shifting intermediate position M as in the downshift, recognizes that the speed change mechanism 17 is being shifted from the low gear (an example of a gear before a gear shift) to the high gear (an example of a gear after a gear shift), and controls the motor 9 so as to temporarily reduce an auxiliary driving force. Thus, the torque of a resultant driving force applied to the resultant-force transmission member 15 during a gear shifting temporarily decreases, achieving smooth shifting from the low gear to the high gear (upshift).

In the present embodiment, the auxiliary driving force of the motor 9 is temporarily reduced when the speed change mechanism 17 is being shifted from the low gear to the high gear and when the speed change mechanism 17 is being shifted from the high gear to the low gear. Only during a gear shifting from the high gear to the low gear, the auxiliary driving force of the motor 9 may be temporarily reduced and during a gear shifting from the low gear to the high gear, the auxiliary driving force of the motor 9 may be controlled so as not to decrease.

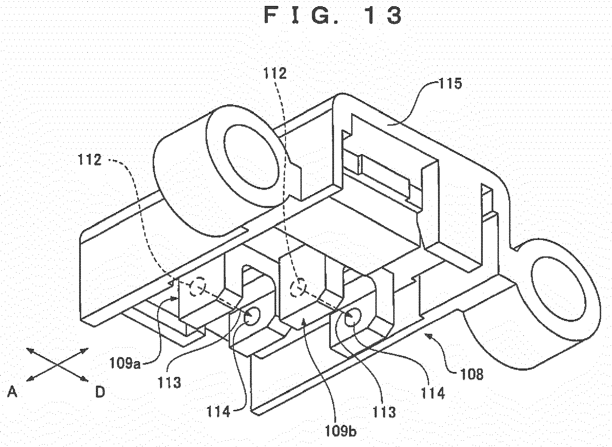

In the present embodiment, as shown in FIGS. 13 and 15, the first and second optical sensors 109a and 109b of the detection unit 108 partially overlap each other in the axial direction A and are displaced from each other in the direction D orthogonal to the axial direction A. However, the present invention is not limited to this configuration. For example, the detection unit 108 may be configured as will be shown in second and third embodiments.

### (Second Embodiment)

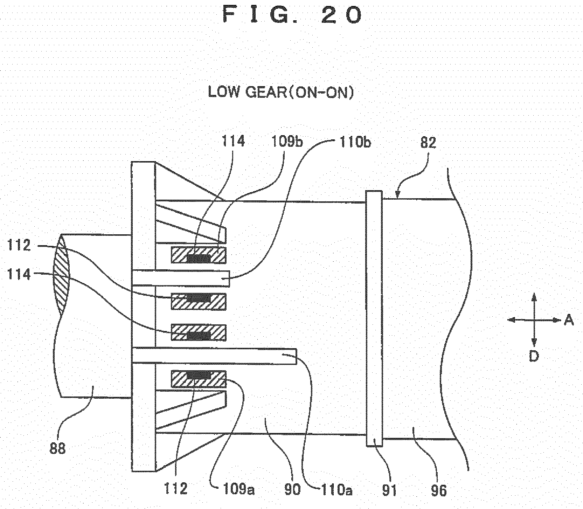

In the second embodiment, as shown in FIGS. 20 to 22, first and second optical sensors 109a and 109b are adjacent to each other in a direction D orthogonal to an axial direction A. Moreover, a second detection portion 110b is shorter than a first detection portion 110a.

If a low gear is selected in this configuration, as shown in FIG. 20, a movable shifting member 82 moves to a low-gear shift position L, detected light 113 of the first optical sensor 109a is blocked by the first detection portion 110a, and detected light 113 of the second optical sensor 109b is blocked by the second detection portion 110b. Thus, the first optical sensor 109a and the second optical sensor 109b are both turned on.

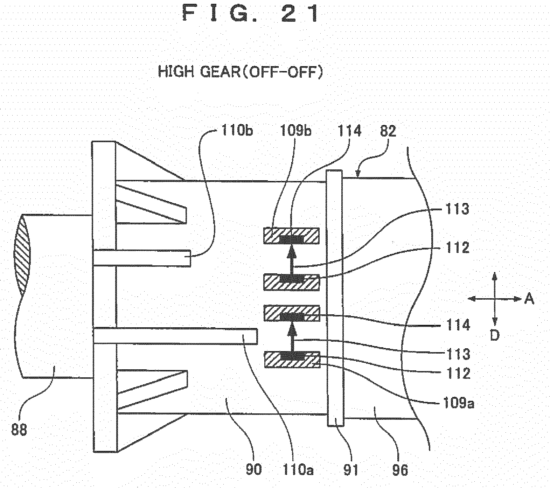

Moreover, as shown in FIG. 21, if a high gear is selected, the movable shifting member 82 moves to a high-gear shift position H, the detected light 113 of the first optical sensor 109a is received by a light receiving portion 114, and the detected light 113 of the second optical sensor 109b is received by a light receiving portion 114. Thus, the first optical sensor 109a and the second optical sensor 109b are both turned off.

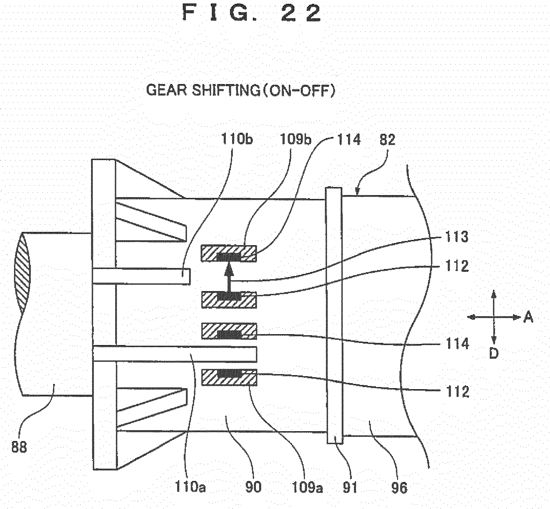

As shown in FIG. 22, during the gear shifting state from the high gear to the low gear (during a gear shifting) or during the gear shifting state from the low gear to the high gear (during a gear shifting), the detected light 113 of the first optical sensor 109a is blocked by the first detection portion 110a while the detected light 113 of the second optical sensor 109b is received by the light receiving portion 114. This turns on the first optical sensor 109a and turns off the second optical sensor 109b.

In the first and second embodiments, the detection unit 108 having the two optical sensors 109aand 109b, and the two detection portions 110a and 110b may have three or more optical sensors or detection portions instead. In this case, it is possible to accurately detect that the speed change mechanism 17 is being shifted from the high gear to the low gear or from the low gear to the high gear.

### (Third Embodiment)

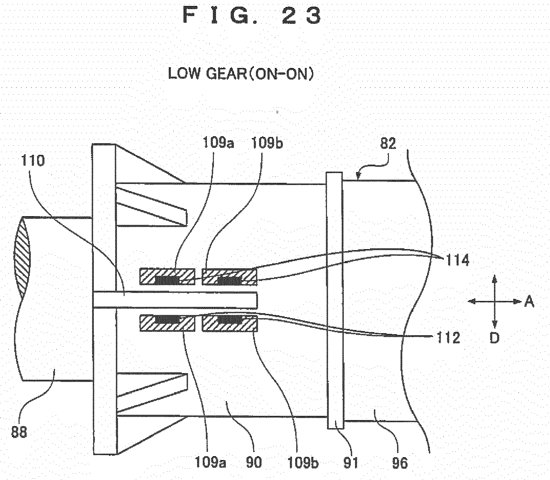

In a third embodiment, as shown in FIGS. 23 to 25, first and second optical sensors 109a and 109b are adjacent to each other in an axial direction A. Moreover, only one detection portion 110 is provided on the outer periphery of an interlocking cylinder 90.

As shown in FIG. 23, if a low gear is selected in this configuration, a movable shifting member 82 moves to a low-gear shift position L and the detection portion 110 block detected light 113 of the first optical sensor 109a and detected light 113 of the second optical sensor 109b. This turns on both of the first optical sensor 109a and the second optical sensor 109b.

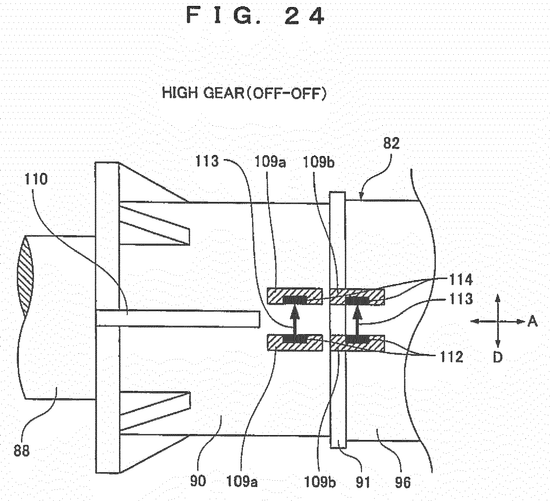

As shown in FIG. 24, if a high gear is selected, the movable shifting member 82 moves to a high-gear shift position H, the detected light 113 of the first optical sensor 109a is received by a light receiving portion 114, and the detected light 113 of the second optical sensor 109b is received by a light receiving portion 114. This turns off both of the first optical sensor 109a and the second optical sensor 109b.

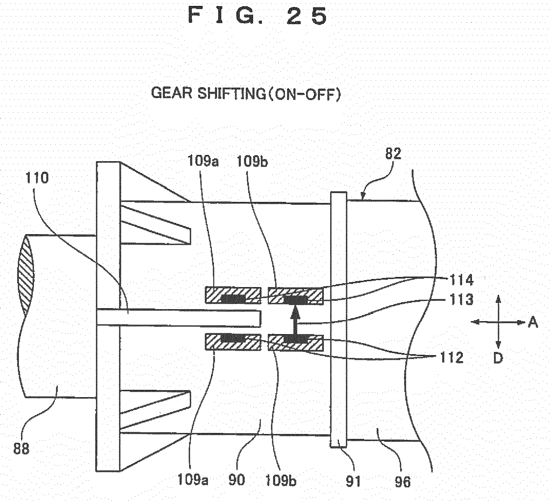

As shown in FIG. 25, during the gear shifting state from the high gear to the low gear (during a gear shifting) or during the gear shifting state from the low gear to the high gear (during a gear shifting), the detected light 113 of the first optical sensor 109a is blocked by the detection portion 110 while the detected light 113 of the second optical sensor 109b is received by the light receiving portion 114. This turns on the first optical sensor 109a and turns off the second optical sensor 109b.

In the third embodiment, a detection unit 108 having the two optical sensors 109a and the two optical sensors 109b may have three or more optical sensors. In this case, it is possible to accurately detect that the speed change mechanism 17 is being shifted from the high gear to the low gear or from the low gear to the high gear.

In the foregoing embodiments, if the speed change mechanism 17 is shifted to the low gear, the first optical sensor 109a and the second optical sensor 109b are turned on. The optical sensors may be turned off. If the speed change mechanism 17 is shifted to the high gear, the first optical sensor 109a and the second optical sensor 109b are turned off. The optical sensors may be turned on. If the speed change mechanism 17 is being shifted from the high gear to the low gear or from the low gear to the high gear, the first optical sensor 109a is turned on and the second optical sensor 109b is turned off. The first optical sensor 109a may be turned off and the second optical sensor 109b may be turned on.

In the foregoing embodiments, the optical sensors 109a and 109b and the detection portions 110, 110a, and 110b are used in the detection unit 108 so as to detect the detection portions 110, 110a, and 110b in a noncontact manner. The optical sensors 109a and 109b may be replaced with contact-type sensors such as a proximity switch.

In the foregoing embodiments, the speed change mechanism 17 can be shifted to two gears, that is, high and low gears. The number of gears is not limited to two and thus at least three gears may be provided instead.

## Claims

1. A drive unit (10) provided for an electric power-assisted bicycle (1) that can travel with a combination of a human driving force generated by a pedal force from a pedal and an auxiliary driving force generated by a motor (9),
the drive unit (10) comprising a crank shaft (14) rotatable by a human driving force, a resultant-force transmission member (15) rotatable by a resultant driving force of a human driving force and an auxiliary driving force, an output wheel member (16) provided on the resultant-force transmission member (15), and a speed change mechanism (17) that changes a rotation speed of the resultant-force transmission member (15),
the crank shaft (14) and the resultant-force transmission member (15) being coaxial with each other, and
the speed change mechanism (17) having a plurality of selectable gears with different gear ratios,
**characterized in**
the drive unit (10) further comprising a detection unit (108) that detects selected one of the gears,
wherein a gear shifting state between the gears before and after a gear shift is detectable by the detection unit (108) at a gear shift, and
when the gear changing state is detected by the detection unit (108), the motor (9) is controlled so as to temporarily reduce an auxiliary driving force,
wherein the gears include selectable low and high gears,
the speed change mechanism (17) includes a low-speed gear (29), a high-speed gear (30), and a gear shift mechanism (31) that shifts the gears,
the low-speed gear (29) and the high-speed gear (30) interlock with the motor (9),
the gear shift mechanism (31) includes a movable shifting member (82) that is movable to a low-gear shift position (L) and a high-gear shift position (H),
if the low gear is selected, the movable shifting member (82) moves to the low-gear shift position (L) and a resultant driving force is transmitted to the resultant-force transmission member (15) through the low-speed gear (29) so as to rotate the resultant-force transmission member (15), and
if the high gear is selected, the movable shifting member (82) moves to the high-gear shift position (H) and a resultant driving force is transmitted to the resultant-force transmission member (15) through the high-speed gear (30) so as to rotate the resultant-force transmission member (15), and
wherein the detection unit (108) detects a shifting position of the movable shifting member (82) so as to identify the selected gear, and
the detection unit (108) detects an intermediate position between the low-gear shift position (L) and the high-gear shift position (H) of the movable shifting member (82) so as to recognize a gear shifting state.

2. The drive unit (10) according to claim 1, wherein the detection unit (108) has a plurality of detectors (109a, 109b) allowed to be turned on or off, and
the selected gear and the gear shifting state are detected based on the number of detectors (109a, 109b) turned on or off.

3. An electric power-assisted bicycle (1) comprising the drive unit (10) according to any one of claims 1 or 2,
the electric power-assisted bicycle (1) comprising a rear wheel member (25) provided on a rear wheel (4), and
an endless driving force transmission member (26) looped over the output wheel member (16) and the rear wheel member (25).

## Patentansprüche

1. Antriebseinheit (10) für ein elektrisch unterstütztes Fahrrad (1), das mit einer Kombination aus einer menschlichen Antriebskraft, die durch eine Pedalkraft von einem Pedal erzeugt wird, und einer Hilfsantriebskraft, die durch einen Motor (9) erzeugt wird, fahren kann,
wobei die Antriebseinheit (10) eine Kurbelwelle (14) umfasst, die durch eine menschliche Antriebskraft drehbar ist, ein Resultierende-Kraft-Übertragungselement (15), das durch eine resultierende Antriebskraft einer menschlichen Antriebskraft und einer Hilfsantriebskraft drehbar ist, ein Ausgangsradelement (16), das auf dem Resultierende-Kraft-Übertragungselement (15) vorgesehen ist, und einen Geschwindigkeitsänderungsmechanismus (17), der eine Rotationsgeschwindigkeit des Resultierende-Kraft-Übertragungselements (15) ändert,
wobei die Kurbelwelle (14) und das Resultierende-Kraft-Übertragungselement (15) koaxial zueinander sind, und
der Geschwindigkeitsänderungsmechanismus (17) eine Vielzahl von wählbaren Gängen mit unterschiedlichen Übersetzungsverhältnissen aufweist,
**dadurch gekennzeichnet, dass**
die Antriebseinheit (10) ferner eine Erfassungseinheit (108) umfasst, den ausgewählten Gang von den Gängen erfasst,
wobei ein Gangwechselzustand zwischen den Gängen vor und nach einem Gangwechsel durch die Erfassungseinheit (108) bei einem Gangwechsel erfasst werden kann, und
wenn der Gangwechselzustand von der Erfassungseinheit (108) erfasst wird, der Motor (9) so gesteuert wird, dass er eine Hilfsantriebskraft vorübergehend reduziert,
wobei die Gänge wählbare niedrige und hohe Gänge beinhalten,
der Geschwindigkeitsänderungsmechanismus (17) einen langsamen Gang (29), ein Hochgeschwindigkeitsgang (30) und einen Gangwechselmechanismus (31) beinhaltet, der die Gänge schaltet,
der langsame Gang (29) und der Hochgeschwindigkeitsgang (30) mit dem Motor (9) ineinandergreifen,
der Gangwechselmechanismus (31) ein bewegliches Schaltelement (82) beinhaltet, das in eine Niedrig-Gang-Schaltstellung (L) und eine Hoch-Gang-Schaltstellung (H) beweglich ist,
wenn der niedrige Gang ausgewählt ist, sich das bewegliche Schaltelement (82) in die Niedrig-Gang-Schaltstellung (L) bewegt und eine resultierende Antriebskraft über den langsamen Gang (29) auf das Resultierende-Kraft-Übertragungselement (15) übertragen wird, um das Resultierende-Kraft-Übertragungselement (15) zu drehen, und
wenn der hohe Gang ausgewählt ist, sich das bewegliche Schaltelement (82) in die Hoch-Gang-Schaltstellung (H) bewegt und eine resultierende Antriebskraft über den Hochgeschwindigkeitsgang (30) auf das Resultierende-Kraft-Übertragungselement (15) übertragen wird, um das Resultierende-Kraft-Übertragungselement (15) zu drehen, und
wobei die Erfassungseinheit (108) eine Schaltposition des beweglichen Schaltelements (82) erfasst, um den gewählten Gang zu identifizieren, und
die Erfassungseinheit (108) eine Zwischenposition zwischen der Niedrig-Gang-Schaltstellung (L) und der Hoch-Gang-Schaltstellung (H) des beweglichen Schaltelements (82) erfasst, um einen Gangwechselzustand zu erkennen.

2. Die Antriebseinheit (10) nach Anspruch 1, wobei die Erfassungseinheit (108) eine Vielzahl von Detektoren (109a, 109b) aufweist, die ein- oder ausgeschaltet werden können, und
der gewählte Gang und der Schaltzustand basierend auf der Anzahl der ein- oder ausgeschalteten Detektoren (109a, 109b) erfasst wird.

3. Elektrisch unterstütztes Fahrrad (1), umfassend die Antriebseinheit (10) nach einem der Ansprüche 1 oder 2,
wobei das elektrisch unterstützte Fahrrad (1) ein Hinterradelement (25) umfasst, das an einem Hinterrad (4) vorgesehen ist, und
ein endloses Antriebskraftübertragungselement (26), das um das Ausgangsradelement (16) und das Hinterradelement (25) geschlungen ist.

## Revendications

1. Unité d'entraînement (10) conçue pour bicyclette à assistance électrique (1) pouvant se déplacer en combinant une force motrice humaine générée par une force exercée par une pédale à partir d'une pédale et une force motrice auxiliaire générée par un moteur (9),
l'unité d'entraînement (10) comprenant un vilebrequin (14) pouvant tourner sous l'effet d'une force motrice humaine, un élément de transmission de la force résultante (15) pouvant tourner sous l'effet d'une force motrice résultante d'une force motrice et d'un effort auxiliaire, un élément de roue de sortie (16) prévu sur l'élément de transmission de force résultante (15) et un mécanisme de changement de vitesse (17) qui modifie une vitesse de rotation de l'élément de transmission de force résultante (15),
le vilebrequin (14) et l'élément de transmission de force résultante (15) étant coaxiaux l'un à l'autre, et
le mécanisme de changement de vitesse (17) ayant une pluralité d'engrenages sélectionnables avec différents rapports d'engrenage,
**caractérisé par**
l'unité d'entraînement (10) comprenant en outre une unité de détection (108) qui détecte l'une des vitesses sélectionnées,
dans lequel un état de changement de vitesse entre les vitesses avant et après un changement de vitesse est détectable par l'unité de détection (108) lors d'un changement de vitesse, et
lorsque l'état de changement de vitesse est détecté par l'unité de détection (108), le moteur (9) est commandé de manière à réduire temporairement une force d'entraînement auxiliaire,
dans lesquels les vitesses comprennent des vitesses lentes et rapides,
le mécanisme de changement de vitesse (17) comprend un engrenage à basse vitesse (29), un engrenage à grande vitesse (30) et un mécanisme de changement de vitesse (31) qui passe les vitesses,
l'engrenage à vitesse lente (29) et l'engrenage à grande vitesse (30) s'emboîtent avec le moteur (9),
le mécanisme de changement de vitesse (31) comprend un élément de changement de vitesse mobile (82) qui peut être déplacé vers une position de changement de vitesse lente (L) et une position de changement de vitesse rapide (H),
si la vitesse lente est sélectionnée, l'élément de changement de vitesse mobile (82) se déplace vers la position de changement de rapport inférieur (L) et une force motrice résultante est transmise à l'élément de transmission de force résultante (15) par l'intermédiaire de l'engrenage à vitesse lente (29) de manière à faire tourner l'élément de transmission de la force résultante (15), et
si la vitesse rapide est sélectionnée, l'élément de changement de vitesse mobile (82) se déplace vers la position de changement de rapport supérieur (L) et une force motrice résultante est transmise à l'élément de transmission de force résultante (15) par l'intermédiaire de l'engrenage à vitesse rapide (30) de manière à faire tourner l'élément de transmission de la force résultante (15), et
dans lequel l'unité de détection (108) détecte une position de changement de vitesse de l'élément de changement de vitesse mobile (82) afin d'identifier la vitesse sélectionnée, et
l'unité de détection (108) détecte une position intermédiaire entre la position de changement de vitesse lente (L) et la position de changement de vitesse rapide (H) de l'élément de changement de vitesse mobile (82) afin de reconnaître un état de changement de vitesse.

2. Unité d'entraînement (10) selon la revendication 1, dans laquelle l'unité de détection (108) comporte une pluralité de détecteurs (109a, 109b) susceptibles d'être activés ou désactivés, et
la vitesse sélectionnée et l'état de changement de vitesse sont détectés en fonction du nombre de détecteurs (109a, 109b) activés ou désactivés.

3. Bicyclette à assistance électrique (1) comprenant l'unité d'entraînement (10) selon l'une quelconque des revendications 1 ou 2,
la bicyclette à assistance électrique (1) comprenant un élément de roue arrière (25) prévu sur une roue arrière (4), et
un élément de transmission de force motrice sans fin (26) en boucle sur l'élément de roue de sortie (16) et l'élément de roue arrière (25).
